# EUROPÄISCHE PATENTSCHRIFT

(11) **EP 3 676 346 B1**
(45) Veröffentlichungstag und Bekanntmachung des Hinweises auf die Patenterteilung: **11.09.2024**
(21) Anmeldenummer: 18765360.5
(22) Anmeldetag: 14.08.2018
(51) Int. Cl.: C09K 5/16, F28D 20/00

(54) **VERFAHREN ZUR THERMOCHEMISCHEN ENERGIESPEICHERUNG**
METHOD FOR THERMO-CHEMICAL ENERGY STORAGE
PROCÉDÉ DE STOCKAGE D'ÉNERGIE THERMOCHIMIQUE

(30) Priorität: 29.08.2017 AT 3452017
(43) Veröffentlichungstag der Anmeldung: 08.07.2020
(73) Patentinhaber: Technische Universität Wien, 1040 Wien (AT); Akademie Der Bildenden Kuenste Wien, 1010 Wien (AT)
(72) Erfinder: MUELLER, Danny, 1080 Wien (AT); KNOLL, Christian, 1100 Wien (AT); WEINBERGER, Peter, 3422 Altenberg (AT); WERNER, Andreeas, 2000 Stockerau (AT); HARASEK, Michael, 1160 Wien (AT)
(74) Vertreter: Ellmeyer, Wolfgang
(86) Internationale Anmeldenummer: PCT/EP2018/072067
(87) Internationale Veröffentlichungsnummer: WO 2019/042768

(56) Entgegenhaltungen:
- EP-A1- 2 483 536
- JP-A- 2014 159 497
- JP-A- H06 136 357
- US-A- 5 441 716
- US-A1- 2015 020 993
- ZINE AIDOUN ET AL: "Pseudo-stable transitions and instability in chemical heat pumps: the NH3-CoCl2 system", APPLIED THERMAL ENGINEERING, vol. 21, no. 10, 1 July 2001 (2001-07-01), GB, pages 1019 - 1034, XP055522533, ISSN: 1359-4311, DOI: 10.1016/S1359-4311(00)00094-6

## Beschreibung

Die vorliegende Erfindung betrifft ein Verfahren zur thermochemischen Energiespeicherung mittels Durchführung reversibler chemischer Reaktionen zur Speicherung von Wärmeenergie in Form von chemischer Energie.

### STAND DER TECHNIK

Thermochemische Energiespeicherung, d.h. die Speicherung von Wärmeenergie in Form von chemischer Energie, ist eine seit Jahrzehnten bekannte, aber erst seit wenigen Jahren intensiver erforschte Methode der Energiespeicherung unter Zyklisierung zumindest einer chemischen Verbindung zwischen den Zuständen zumindest einer reversiblen Gleichgewichtsreaktion. US-Patent 4.365.475 offenbart beispielsweise die Verknüpfung zweier Gleichgewichtsreaktionen zum Zwecke der thermochemischen Energiespeicherung, nämlich die abwechselnde reversible endotherme Bildung der beiden Amminkomplexe CaCl₂.8NH₃ und ZnCl₂.NH₃.

Neben anderen Komplexen von Erdalkali- und Übergangsmetallen sind als Systeme unter spezifischer Verwendung von Amminkomplexen Kombinationen bekannt, bei denen zwischen zwei unterschiedlichen Koordinationszuständen der Amminkomplexe gewechselt wird. Beispiele sind etwa eine Kombination der beiden Chloride CaCl₂ und FeCl₂, mit denen gemäß US-Patent 4.319.627 die folgenden Reaktionen durchgeführt werden:
CaCl₂.8NH₃ 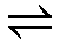 CaCl₂.4NH₃ + 4 NH₃
FeCl₂.2NH₃ + 4 NH₃ 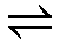 FeCl₂.6NH₃
oder eine weitere Kombination mit Calciumchlorid, nämlich CaCl₂ und MnCl₂, die gemäß Li et al., AIChE J. 59(4), 1334-1347 (April 2013), die in analoger Weise zur obigen Kombination mit Eisenchlorid die folgenden Reaktionen durchlaufen:

CaCl₂.8NH₃ 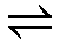 CaCl₂.4NH₃ + 4 NH₃

MnCl₂.2NH₃ + 4 NH₃ 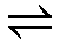 MnCl₂.6NH₃

Als weiteres Beispiel für Amminkomplexe eines Übergangsmetallchlorids offenbaren Aidoun und Ternan, Appl. Therm. Eng. 21, 1019-1034 (2001), die Verwendung von Cobaltchlorid gemäß folgender Gleichung:

CoCl₂.2NH₃ + 4 NH₃ 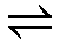 CoCl₂.6NH₃

Die Energiespeicherdichte der oben genannten Systeme ist in den meisten bekannten Fällen allerdings eher gering, und die Korrosivität mancher der eingesetzten Salze stellt häufig ein apparatetechnisches Problem dar. Zusätzlich bereiten jedoch der Transport und die Lagerung der eingesetzten Metallsalze Probleme, da oftmals die bei der exothermen Reaktion erreichten Temperaturen nahe dem Schmelzpunkt der Salze bzw. Komplexe oder sogar darüber liegen, so dass zumindest ein Teil der jeweiligen Salze schmilzt, was zu Verklumpung führt.

Eine Lösung für dieses Problem haben die Erfinder des vorliegenden Anmeldungsgegenstands in ihrer anhängigen österreichischen Patentanmeldung AT A 327/2016 vorgeschlagen, die ein Verfahren offenbart, bei dem Amminkomplexe von Übergangsmetallsalzen gemäß der folgenden reversiblen Summenreaktionen gebildet und zersetzt werden:

[Me(NH₃)ₙ]X + ΔH_{R} 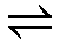 MeX + n NH₃

oder in alternativer Schreibweise:

MeX.nNH₃ + ΔH_{R} 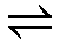 MeX + n NH₃

worin Me für zumindest ein Übergangsmetallion und X für ein oder mehrere Gegenionen in einer zur Neutralisierung des Komplexes ausreichenden Menge, entsprechend ihrer Wertigkeit und jener des Übergangsmetallions, stehen,
wobei ein oder mehrere Übergangsmetallsalze auf einem gegenüber der Reaktion inerten Trägermaterial eingesetzt werden.

Im Gegensatz zu den eingangs zitierten Systemen wird dadurch lediglich die Amminkomplex-Bildungsreaktion des zumindest einen Übergangsmetallsalzes anstelle einer Kombination zweier paralleler, einander chemisch oder thermodynamisch ergänzender Reaktionen durchgeführt. Das heißt, es wird nicht zwischen unterschiedlichen Koordinationszahlen der Amminkomplexe hin und her gewechselt, sondern vielmehr bei der exothermen Reaktion die gesamte Bildungsenthalpie der Amminkomplexe gewonnen. Die Erfinder haben nämlich herausgefunden, dass Übergangsmetall-Amminkomplexe sehr hohe Bildungsenthalpien aufweisen. Dies könnte zwar zu den oben genannten Problemen im Zusammenhang mit zumindest teilweisem Schmelzen der Salze bzw. Komplexe führen. Die Erfindung löst diese Problematik jedoch durch die Aufbringung der Metallsalze auf einen Träger, womit gleichzeitig eine "Verdünnung" der Salze erzielt wird, so dass Schmelzvorgänge und ein damit verbundenes Verklumpen der Salze ausgeschlossen sind. Die auf den Träger aufgebrachten Übergangsmetallsalze bleiben vielmehr auch bei höheren Temperatur weiterhin gut handhabbar. Bei Verwendung eines teilchenförmigen Trägers bleibt das Material rieselfähig und kann dadurch weiterhin auf einfache Weise transportiert und gelagert werden.

Der Nachteil dieser Vorgangsweise liegt darin, dass es, wie oben erwähnt, speziell ohne Verwendung eines Trägermaterials, aber mitunter auch trotz dessen Verwendung, zu einer übermäßig starken Wärmeentwicklung kommen kann, die ein zumindest teilweises Schmelzen des Übergangsmetallsalzes bewirkt, was beim Abkühlen zur Bildung von Aggregaten oder Klumpen oder zur Verstopfung der Poren eines porösen Wärmespeichermediums führen kann.

In Aidoun et al., Appl. Therm. Eng. 21 (10), 1019-1034 (2001), wird das Verhalten von CoCl₂-Amminkomplexen bei unterschiedlichen Temperaturen und Drücken unter Wechsel der Atmosphäre von N₂ zu NH₃ untersucht, und auch dessen potenzielle Verwendung in einer chemischen Wärmepumpe wird erwähnt. Die Experimente wurden dabei mittels thermogravimetrischer Analyse (TGA) verfolgt, und zwar bei einem erhöhten Gasdruck von 260 kPa, es finden sich darin mehrere Diskrepanzen bei den angegebenen Zersetzungstemperaturen, an zahlreichen Stellen im Text werden Schwankungen in der Zusammensetzung der Salze sowie das Vorliegen "pseudo-stabiler" Phasen oder Übergangszustände beschrieben, und das Ausgangsmaterial war nicht jedesmal der gleiche Amminkomplex. Für eine etwaige Verwendung in einer chemischen Wärmepumpe wird lediglich der Übergang zwischen dem Hexamminkomplex CoCl₂ · 6NH₃ und dem Diamminkomplex CoCl₂ · 2NH₃ nahegelegt - und das in einem einzigen Schritt der Abspaltung bzw. Anlagerung von NH₃-Liganden.

Ziel der Erfindung war daher die Entwicklung eines alternativen Verfahrens, mit dem diese Probleme gelöst werden können.

### OFFENBARUNG DER ERFINDUNG

Dieses Ziel erreicht die vorliegende Erfindung durch Bereitstellung eines Verfahrens zur thermochemischen Energiespeicherung mittels Durchführung reversibler chemischer Reaktionen zur Speicherung von Wärmeenergie in Form von chemischer Energie in einem oder mehreren Amminkomplexen von Übergangsmetallsalzen der Formel [Me(NH₃)ₙ]X, worin Me für zumindest ein Übergangsmetallion, X für ein oder mehrere Gegenionen in einer zum Ladungsausgleich des Komplexes ausreichenden Menge und n für die Anzahl der an das jeweilige Übergangsmetallsalz koordinierten NH₃-Liganden stehen, unter Nutzung des folgenden chemischen Gleichgewichts:

[Me(NH₃)ₙ]X + ΔH_{R} 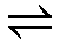 MeX + n NH₃,

das gegenüber der obigen Vorgangsweise dadurch gekennzeichnet ist, dass
die Wärmespeicherung unter endothermer Abspaltung der NH₃-Liganden aus dem Amminkomplex und/oder die Wärmefreisetzung unter exothermer Beladung des Übergangsmetallsalzes mit den NH₃-Liganden in zumindest zwei Stufen bei unterschiedlichen Temperaturen durchgeführt werden/wird, und mit der Maßgabe, dass die Anzahl n der an das Übergangsmetallsalz koordinierten NH₃-Liganden zumindest 2 beträgt.

Die Erfinder haben nämlich im Zuge weiterer Forschungen herausgefunden, dass es bei den Amminkomplexen mancher Übergangsmetallsalze möglich ist, die NHs-Liganden bei verschiedenen Temperaturniveaus einzeln oder paarweise vom Zentralatom abzuspalten bzw. daran zu binden und so in zumindest zwei Stufen, sozusagen "kaskadierend", vom vollständig koordinierten Amminkomplex zum ligandenfreien Übergangsmetallsalz zu gelangen oder umgekehrt.

Dies ermöglicht eine feiner abgestimmte Anpassung des Verfahrens an die jeweils herrschenden Gegebenheiten, d.h. an einen aktuellen Wärmeüberschuss oder Wärmebedarf, durch gezielte Beladung des Wärmespeichermediums mit diskreten Wärmemengen unter gleichzeitiger Abspaltung jeweils eines Teils der NH₃-Liganden des Ammin-Komplexes bzw. die Abgabe nur eines Teils der im Wärmespeichermedium gespeicherten Wärmemenge durch Bindung nur eines Teils der maximal koordinierbaren Liganden an das Zentralatom bei jeweils unterschiedlichen Temperaturen.

Beispielsweise setzt der Tetramminkomplex von CuSO₄ seine vier NH₃-Liganden bei Temperaturen ab etwa 80 °C (1 Ligand), etwa 170 °C (2 Liganden) bzw. rund 310 °C (1 Ligand) frei, wie dies aus den späteren Beispielen hervorgeht. Für den Fall, dass nicht genügend speicherbare Wärmeenergie (wie z.B. Abwärme) zur Verfügung steht, um das Wärmespeichermedium auf über 300 °C zu erhitzen, braucht selbiges in einer ersten Stufe nur auf eine Temperatur von > 80 °C oder > 170 °C erhitzt zu werden, wodurch nur ein Ligand bzw. nur drei Liganden abgespalten wird/werden und die dafür erforderliche Wärmemenge als chemische Energie im Wärmespeichermedium gespeichert wird. Der oder die verbliebene(n) Ligand(en) kann/können dann zu einem späteren Zeitpunkt abgespalten werden, wenn genügend speicherbare Wärme zur Verfügung steht. Dabei können die Koordinationsstellen des Wärmespeichermediums auch zwischenzeitlich unter Abgabe von Wärme wieder mit NH₃-Liganden aufgefüllt werden, bevor eine neuerliche Abspaltung derselben erfolgt.

Von zumindest ebenso großer Bedeutung ist die umgekehrte Option. Beispielsweise erfolgt die Freisetzung der im ligandenfreien CuSO₄ gespeicherten Wärme unter gleichzeitiger stufenweise Regenerierung des Tetramminkomplexes durch Kontakt mit einem Ammoniak-hältigen Gasgemisch auf den folgenden Temperaturniveaus: rund 250 °C (1 Ligand), rund 140 °C (2 Liganden) und knapp 70 °C (1 Ligand). Wird nur ein Teil der gespeicherten Wärme benötigt, braucht auch nur ein Teil der Koordinationsstellen des Wärmespeichermediums mit Liganden besetzt zu werden, indem das heiße CuSO₄ mit dem gezielt auf eine der beiden höheren Temperaturen abgekühlt wird, und der Rest der gespeicherten Wärme kann - unter vollständiger Besetzung aller Koordinationsstellen mit NH₃ - zu einem späteren Zeitpunkt freigesetzt werden.

Vorzugsweise wird im Verfahren der vorliegenden Erfindung ein Übergangsmetallsalz eingesetzt, mit dem sowohl die Beladung mit Wärme als auch deren Wiederfreisetzung stufenweise durchführbar sind, was ganz speziell auf das genannte CuSO₄ zutrifft.

Generell jedoch wird als Übergangsmetallsalz vorzugsweise ein Salz von Cu, Ni, Co oder Zn, eingesetzt, da für diese Metalle bereits ihre Eignung im erfindungsgemäßen Verfahren bestätigt werden konnte, was freilich nicht ausschließt, dass die derzeit noch laufenden Forschungen der Erfinder noch weitere geeignete Metalle zutage fördern werden. Noch bevorzugter wird ein Salz von Cu oder Ni, insbesondere von Cu, eingesetzt, da deren Temperaturniveaus gezielter ansteuerbar sind als jene der anderen bevorzugten Metalle.

Weiters wird im erfindungsgemäßen Verfahren vorzugsweise ein Sulfat oder Chlorid, noch bevorzugter ein Sulfat, des Übergangsmetalls eingesetzt, da die Eignung dieser Anionen bereits bestätigt werden konnte, während für die Anionen Carbonat, Silicat und Phosphat in ersten Versuchen der Erfinder gar keine Amminkomplexbildung beobachtet werden konnte. Aufgrund der Flüchtigkeit des Chlorids während der thermischen Zersetzung der Komplexe wird Sulfat besonders bevorzugt, insbesondere, wie bereits erwähnt, CuSO₄.

In weiteren bevorzugten Ausführungsformen der Erfindung wird das Übergangsmetallsalz auf einem gegenüber der Reaktion inerten Speichermaterial eingesetzt, wodurch die Gefahr von Agglomeration des Wärmespeichermediums noch weiter verringert wird und dessen Handhabbarkeit verbessert wird. Darüber hinaus aber verschieben sich die Temperaturniveaus, bei denen die NH₃-Liganden vom jeweiligen Amminkomplex des Übergangsmetallsalzes abgespalten werden mitunter erheblich. Ohne sich auf eine bestimmte Theorie festlegen zu wollen, nehmen die Erfinder an, dass der Grad der Verschiebung von der spezifischen Wärmekapazität des Trägermaterials abhängt.

Dabei haben die Erfinder herausgefunden, dass sich nicht jedes Trägermaterial für eine erfindungsgemäß kaskadierende Durchführung des Verfahrens eignet, weswegen das Trägermaterial vorzugsweise aus Silica, Sepiolith, Celit, Vermiculit und Aktivkohle ausgewählt ist, wovon noch bevorzugter Silica, Sepiolith oder Celit, insbesondere Sepiolith, eingesetzt wird, da bei diesen bevorzugten Trägermaterialien die Temperaturniveaus der Wärmespeicherung bzw. -freisetzung besser steuerbar sind als in anderen Fällen und sich speziell für Sepiolith nicht nur besonders gute Eignung im erfindungsgemäßen Verfahren herausgestellt hat, sondern dieses Material auch deutlich kostengünstiger im Handel erhältlich ist als beispielsweise Silica oder Celit.

Bei Verwendung eines Trägermaterials wird das Übergangsmetallsalz darauf vorzugsweise in einem Gewichtsverhältnis zwischen Salz und Trägermaterial von zumindest 1:1, noch bevorzugter zumindest 3:1, eingesetzt, um pro Gewichtseinheit der Kombination eine hohe speicherbare Wärmemenge zu ermöglichen. Noch bevorzugter wird das Übergangsmetallsalz auf dem Trägermaterial in einem Gewichtsverhältnis zwischen Salz und Trägermaterial zwischen 4:1 und 6:1, insbesondere in einem Gewichtsverhältnis von etwa 5:1, eingesetzt. Soll die Menge an Übergangsmetallsalz bei gleichzeitig hoher speicherbarer Wärmemenge möglichst gering gehalten werden, kann allerdings auch ein Verhältnis von nur 1:1 gewählt werden.

### KURZBESCHREIBUNG DER ZEICHNUNGEN

Die Erfindung wird nachstehend anhand von konkreten Ausführungsbeispielen unter Bezugnahme auf die beiliegenden Zeichnungen detaillierter beschrieben, wobei Letztere Folgendes zeigen.
Die Fig. 1 bis 7 zeigen die Ergebnisse thermogravimetrischer Analysen der Amminkomplexe der erfindungsgemäßen Beispiele 1 bis 5.
Die Fig. 8, 10, 12, 17 und 18 zeigen Vergleiche des in CuSO₄ auf verschiedenen Trägermaterialien und in variierenden Gewichtsverhältnissen speicherbaren Energiegehalts als Balkendiagramme.
Die Fig. 9, 11 und 13 bis 16 zeigen die Ergebnisse thermogravimetrischer Analysen der Amminkomplexe der erfindungsgemäßen Beispiele 6 bis 10 bzw. von Vergleichsbeispiel 1.

### BEISPIELE

Alle in den nachstehenden Beispielen eingesetzten Reagenzien, d.h. Übergangsmetallsalze und Trägermaterialien, sind kommerziell erhältlich und wurden ohne weitere Reinigung eingesetzt.

### Synthesebeispiele 1 bis 5

Herstellung der Amminkomplexe

MeX + n NH₃ 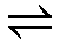 [Me(NH₃)ₙ]X + ΔH_{R}

Me = Cu²⁺, Ni²⁺, Co²⁺, Zn²⁺
X = SO₄²⁻ oder 2 Cl⁻
n = 4 (für SO₄²⁻) bzw. 5 (für Cl⁻)

Das jeweilige, aus kommerzieller Quelle stammende wasserfreie Übergangsmetallsalz wurde im einem Laborwirbelschichtreaktor mit einem Überschuss an NH₃ zu den Amminkomplexen umgesetzt.

Auf diese Weise wurden die folgenden Amminkomplexe hergestellt:
Synthesebeispiel 1: [Cu(NH₃)₄]SO₄
Synthesebeispiel 2: [Ni(NH₃)₄]SO₄
Synthesebeispiel 3: [Co(NH₃)₄]SO₄
Synthesebeispiel 4: [Zn(NH₃)₄]SO₄
Synthesebeispiel 5: [Cu(NH₃)₅]Cl₂

### Beispiele 1 bis 5 - Versuche mit reinen Übergangsmetallsalzen

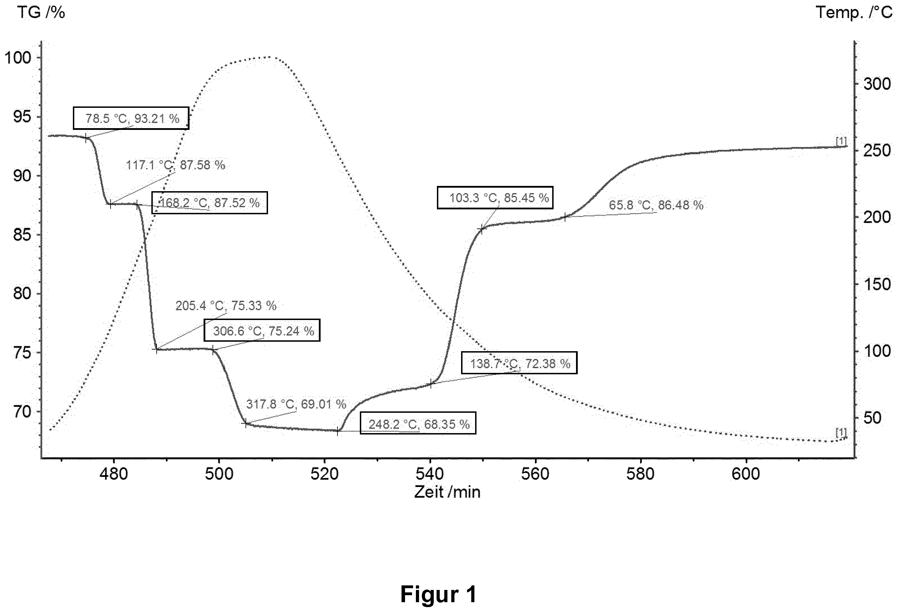

Die oben hergestellten Amminkomplexe wurden anschließend in einem Al₂O₃-Tiegel unter Verwendung eines STA 449 C Jupiter^{®} DSC-TGA-Instruments von Netzsch in einer N₂-Atmosphäre mit einer Heizrate von 10 K/min erhitzt und unter N₂-Atmosphäre abgekühlt und dabei thermogravimetrisch analysiert. Mit dem Einleiten von Ammoniak wurde unmittelbar nach Erreichen der Maximaltemperatur begonnen. Die dabei aufgezeichneten TGA-Kurven (unkorrigiert) sind in den Fig. 1 bis 7 dargestellt, wobei jeweils die durchgehende Linie das Gewicht und die punktierte Linie die Temperatur über der Zeit angeben. Die Startpunkte (Temperatur sowie Gew.-% der Ausgangsverbindung) der relevanten Gewichtsab- bzw. -zunahmen aufgrund von Abspaltung bzw. Aufnahme von NH₃-Liganden sind umrandet gekennzeichnet.

### Beispiel 1: [Cu(NH₃)₄]SO₄

In Fig. 1 ist die TGA-Kurve des in Synthesebeispiel 1 hergestellten Tetraamminkupfersulfats dargestellt. In der folgenden Tabelle 1 sind die Temperaturen der Startpunkte der Gewichtsabnahmen während des Aufheizens sowie der Gewichtszunahmen während des Abkühlens aufgelistet.

**Tabelle 1**

| | NH₃-Abspaltung | NH₃-Aufnahme |
|---|---|---|
| Stufe 1, 1 NH₃-Ligand | 79 °C | 66 °C |
| Stufe 2, 2 NH₃-Liganden | 168 °C | 138 °C |
| Stufe 3, 1 NH₃-Ligand | 307 °C | 248 °C |

Man erkennt, dass im Falle von [Cu(NH₃)₄]SO₄ die Abspaltung der vier NH₃-Liganden beim Erhitzen in drei Stufen erfolgt, wobei zunächst ein Ligand, dann zwei Liganden gemeinsam und zuletzt wieder ein Ligand abgespalten werden. Beim darauf folgenden Abkühlen durch Einleiten von Ammoniak-hältigem Trägergas wird der ursprüngliche Tetraamminkomplex ebenso stufenweise wiederhergestellt, wobei die erneute Anlagerung der vier NH₃-Liganden nach demselben (umgekehrten) Schema 1-2-1 erfolgt. Aus diesen Ergebnissen ist klar ersichtlich, dass sowohl die Wärmespeicherung als auch die spätere Wärmefreisetzung unter Verwendung dieses Amminkomplexes als Wärmeträger jeweils in zwei oder drei Stufen erfolgen kann, wobei die Abspaltung und die Wiederaufnahme der NH₃-Liganden jeweils nach einem beliebigen der Schemata 1-2-1, 1-3, 3-1, 1-2 oder 2-1 erfolgen können, je nachdem, welchen Temperaturen der Amminkomplex bzw. das ligandenfreie Übergangsmetallsalz ausgesetzt wird bzw. wie rasch das Erhitzen bzw. das Abkühlen erfolgt. Die Temperaturdifferenzen zwischen den einzelnen Stufen betragen bei beiden Prozessen, d.h. Abspaltung und Aufnahme von NH₃-Liganden, jeweils mehrere Dutzend Kelvin, so dass leicht eine dazwischen liegende Temperatur gewählt werden kann.

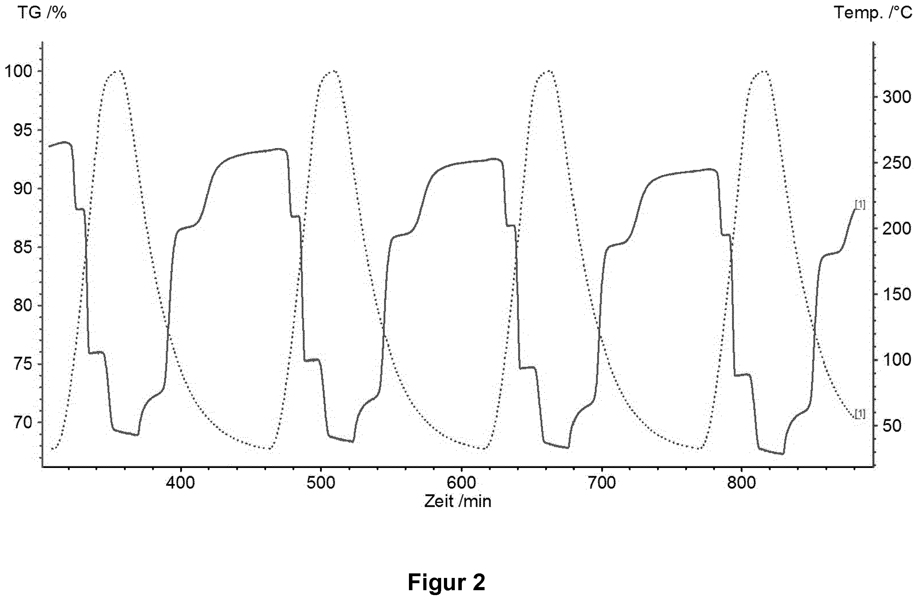

In Fig. 2 ist eine entsprechende TGA-Kurve für die Zyklierung von [Cu(NH₃)₄]SO₄ in drei Stufen dargestellt, wobei sowohl die Wärmespeicherung als auch die Wärmefreisetzung jeweils nach dem Schema 1-2-1 durchgeführt wurden. Während bei dem in Fig. 1 gezeigten Versuch der Prozess aus Wärmespeicherung und -freisetzung rund 600 min (d.h. 10 h) dauerte, betrug bei dem in Fig. 2 gezeigten Versuch die Dauer eines Zyklus nur rund 150 min (d.h. 2,5 h), obwohl in beiden Fällen auf dieselbe Maximaltemperatur von rund 320 °C erhitzt wurde.

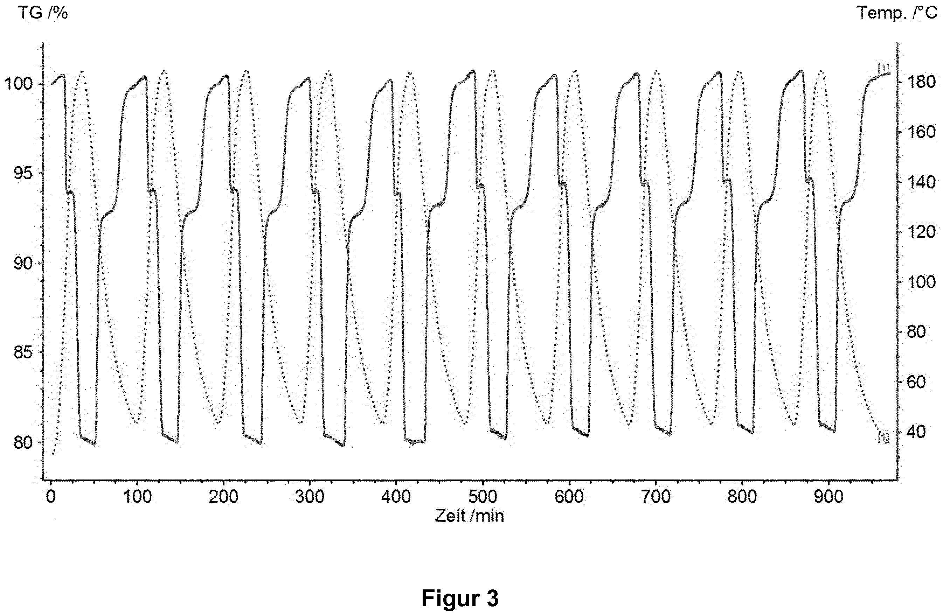

In Fig. 3 ist hingegen die TGA-Kurve eines analogen Zyklus, allerdings mit nur jeweils zwei Stufen nach dem Schema 1-2 für die Wärmespeicherung und dem umgekehrten Schema 2-1 für die Wärmefreisetzung dargestellt, wobei auf eine Maximaltemperatur von knapp über 180 °C erhitzt wurde, so dass nur drei NH₃-Liganden wiederkehrend abgespalten und wiederaufgenommen wurden und der vierte am Cu-Atom koordiniert blieb, wie dies aus den Temperaturangaben in Tabelle 1 hervorgeht. Dementsprechend betrug die Dauer eines Zyklus in diesem Versuch nur rund 95 min.

Man erkennt, dass bei den Zyklen aus Wärmespeicherung und -freisetzung auch Kombinationen zweier verschiedener Schemata für die beiden Teilschritte möglich sind, was die Flexibilität bei der Temperaturwahl gegenüber dem Stand der Technik enorm erhöht.

### Beispiel 2: [Ni(NH₃)₄]SO₄

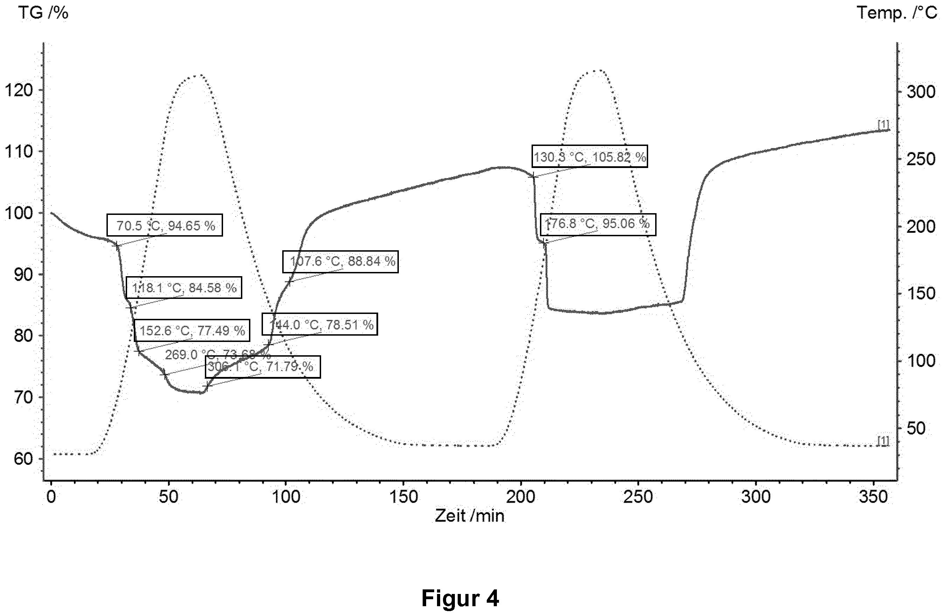

In Fig. 4 ist die TGA-Kurve des in Synthesebeispiel 2 hergestellten Tetraamminnickelsulfats dargestellt. In nachstehender Tabelle 2 sind wiederum die Temperaturen der Startpunkte der Gewichtsab- und -zunahmen aufgelistet.

**Tabelle 2**

| | NH₃-Abspaltung | NH₃-Aufnahme |
|---|---|---|
| Stufe 1, 2 NH₃-Liganden | 71 °C | 107 °C |
| Stufe 2, 1 NH₃-Ligand | 118 °C | 144 °C |
| Stufe 3, 1 NH₃-Ligand | 153 °C | 306 °C |

Man erkennt, dass hier der kaskadische Prozess nicht zyklenstabil ist, d.h. im ersten Zyklus lässt sich ein Muster einer 2-1-1-Abspaltung erkennen, während im zweiten Zyklus nur eine 2-2-Abspaltung der Liganden erfolgt. Während bei der ersten Abkühlung unter NH₃ eine kaskadische Aufnahme der NH₃-Liganden erfolgt, erfolgt dieser Prozess bei der zweiten Abkühlung kontinuierlich.

### Beispiel 3: [Co(NH₃)₄]SO₄

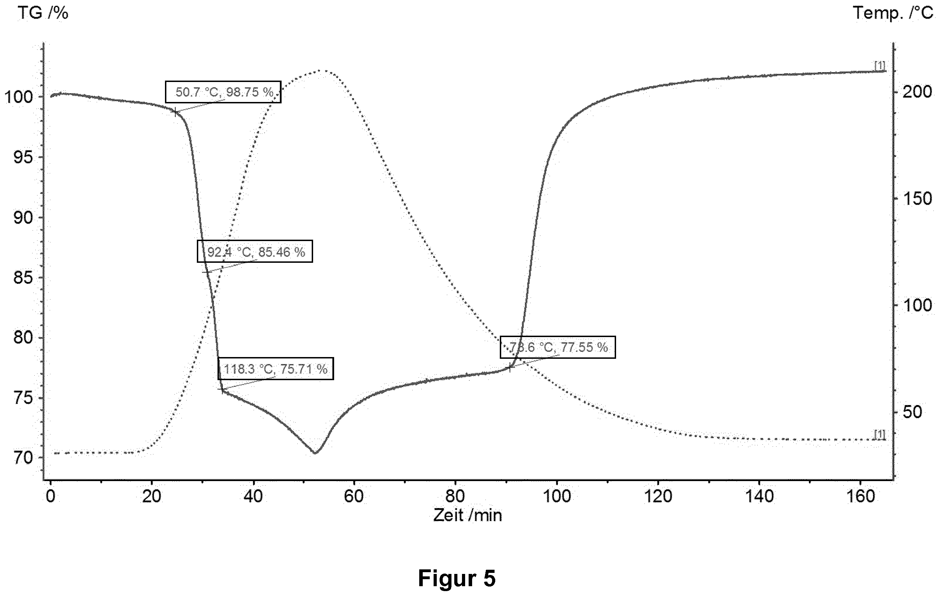

In Fig. 5 ist die TGA-Kurve des in Synthesebeispiel 3 hergestellten Tetraammincobaltsulfats dargestellt, und in nachstehender Tabelle 3 sind die relevanten Temperaturen aufgelistet.

**Tabelle 3**

| | NH₃-Abspaltung | NH₃-Aufnahme |
|---|---|---|
| Stufe 1, 2 NH₃-Liganden | 51 °C | - |
| Stufe 2, 2 NH₃-Liganden | 92 °C | 79 °C |

Man erkennt, dass die vier NH₃-Liganden aus dem Cobalt-Komplex in zwei Stufen aus jeweils zwei Liganden abgespalten werden, wobei die Temperaturdifferenz rund 40 °C beträgt, so dass leicht eine dazwischen liegende Maximaltemperatur gewählt werden kann, so dass im Bedarfsfall nur zwei der vier Liganden abgespalten werden, falls nicht genügend speicherbare Wärme zur Verfügung steht. Die Wiederaufnahme der Liganden erfolgt allerdings in nur einer einzigen Stufe, beginnend bei etwa 79 °C, so dass bei Verwendung dieses Übergangsmetallsalz-Amminkomplexes nur die in diesem Versuch eingesetzte Variante der stufenweisen Wärmespeicherung zur Verfügung steht.

### Beispiel 4: [Zn(NH₃)₄]SO₄

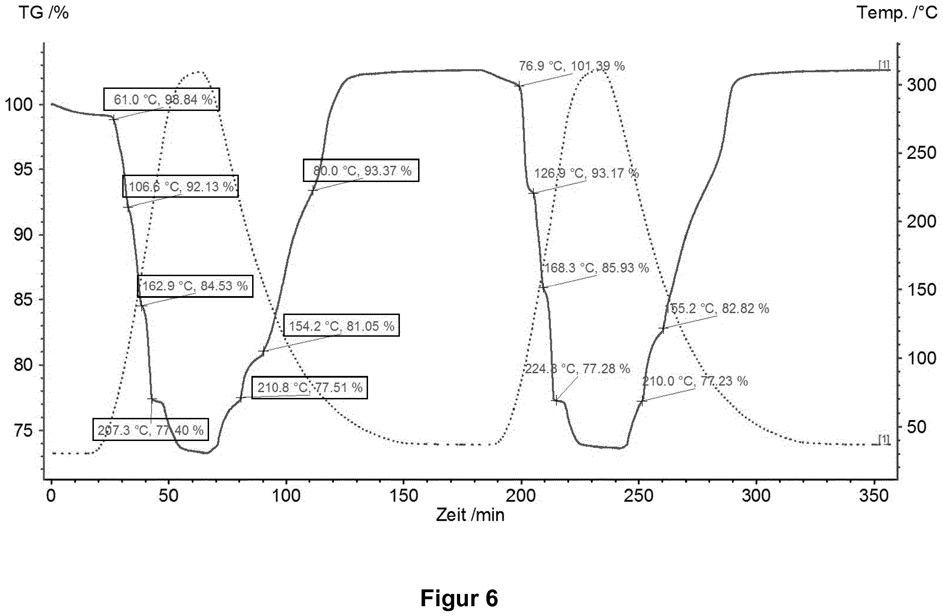

In Fig. 6 ist die TGA-Kurve des in Synthesebeispiel 4 hergestellten Tetraamminzinksulfats dargestellt, und in nachstehender Tabelle 4 sind die relevanten Temperaturen aufgelistet.

**Tabelle 4**

| | NH₃-Abspaltung | NH₃-Aufnahme |
|---|---|---|
| Stufe 1, 1 NH₃-Ligand | 61 / 77 °C | 80 °C |
| Stufe 2, 1 NH₃-Ligand | 107 / 127 °C | 155 °C |
| Stufe 3, 1 NH₃-Ligand | 163 / 168 °C | 210 °C |
| Stufe 4, 1 NH₃-Ligand | 207 / 225 °C | ca. 250 °C |

Es ist zu erkennen, dass die vier Liganden aus [Zn(NH₃)₄]SO₄ im Wärmespeicherprozess einzeln in vier Stufen abspaltbar sind, zumal die Temperaturdifferenzen zwischen den Stufen jeweils rund 40 °C bzw. 60 °C betragen. Die Wiederaufnahme der Liganden erfolgt in vier Stufen, wobei die erste NH₃-Aufnahme bei ca. 250 °C beginnt.

### Beispiel 5: [Cu(NH₃)₅]Cl₂

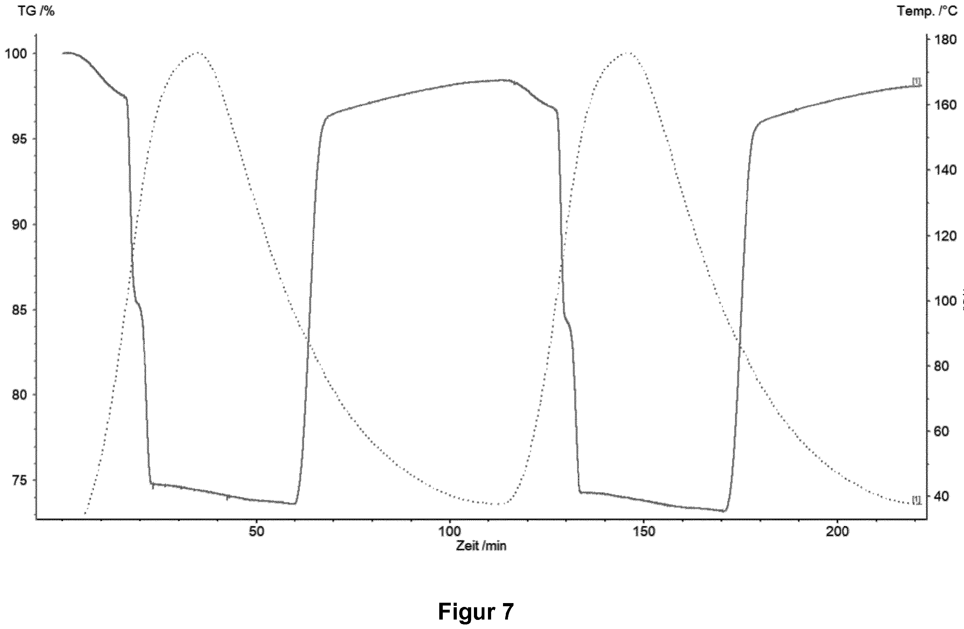

In Fig. 7 ist die TGA-Kurve des in Synthesebeispiel 5 hergestellten Pentamminkupferchlorids dargestellt, und in nachstehender Tabelle 5 sind die relevanten Temperaturen aufgelistet.

**Tabelle 5**

| | NH₃-Abspaltung | NH₃-Aufnahme |
|---|---|---|
| Stufe 1, 3 NH₃-Liganden | 98 °C | 94 °C |
| Stufe 2, 2 NH₃-Liganden | 128 °C | |

Man erkennt, dass hier die Abspaltung der 5 NH3-Liganden zweistufig nach dem Schema 3-2 erfolgt, wobei die NH₃-Aufnahme kontinuierlich und somit nicht kaskadisch erfolgt.

### Beispiele 6 bis 10, Vergleichsbeispiel 1 - Versuche mit Trägermaterialien

Zur Untersuchung, ob die Wärmespeicherung bzw. -freisetzung auch mit an Trägermaterialien gebundenen Amminkomplexen kaskadiert durchführbar ist, wurde der Amminkomplex, der in den obigen Beispielen am besten abgeschnitten hatte, nämlich Tetraamminkupfersulfat [Cu(NH₃)₄]SO₄, auf verschiedenen Trägermaterialien getestet.

Dazu wurden 50 g des jeweiligen Trägermaterials für variierende Zeitspannen in eine gesättigte CuSO₄-Lösung getaucht und so damit getränkt. Anschließend wurde das jeweilige Produkt abgetrennt, mit 200 ml entionisiertem Wasser nachgewaschen und 12 h lang bei 60 °C und danach 6 h lang bei 350 °C getrocknet. Mittels Röntgenfluoreszenzanalyse wurde der jeweilige CuSO₄-Gehalt bestimmt.

Anschließend wurden die mit CuSO₄ getränkten Träger mit NH₃ im Laborwirbelschichtreaktor begast, um die Tetraamminkupfersulfat-Komplexe herzustellen, die in der Folge ähnlichen Heiz-/Kühl-Zyklen bzw. -Behandlungen wie oben beschrieben unter gleichzeitiger TGA-Analyse unterzogen wurden. Zudem wurde die Menge der in diesen Materialien speicherbaren Wärmeenergie anhand einer DSC-Analyse bestimmt.

### Vergleichsbeispiel 1: [Cu(NH₃)₄]SO₄ auf Zeolith

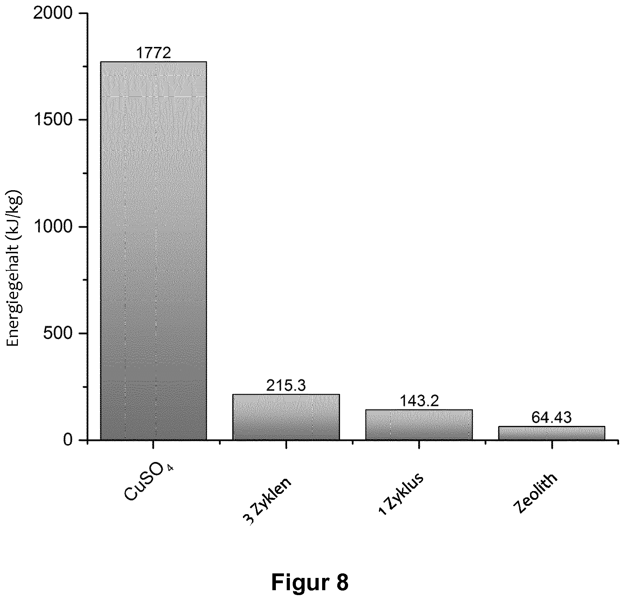

Analog zu ihren früheren, in der eingangs zitierten Patentanmeldung beschriebenen Versuchen, haben die Erfinder zunächst Zeolith als Trägermaterial getestet. Dazu wurden zwei unterschiedliche Beladungen von Zeolith mit Kupfersulfat hergestellt, wozu der Träger einem Imprägnierzyklus bzw. drei Imprägnierzyklen in CuSO₄-Lösung unterzogen und die imprägnierten Träger anschließend direkt im DSC-TGA-Instrument mit NH₃ zum Tetraamminkomplex umgesetzt wurden, um die Wärmeströme messen zu können. Die in den imprägnierten Trägern speicherbaren Wärmemengen wurden mit 143,2 bzw. 215,3 kJ/kg berechnet. Zum Vergleich: In reinem [Cu(NH₃)₄]SO₄ sind 1772 kJ/kg und in reinem Zeolith 64,43 kJ/kg speicherbar, wie dies in Fig. 8 grafisch dargestellt ist.

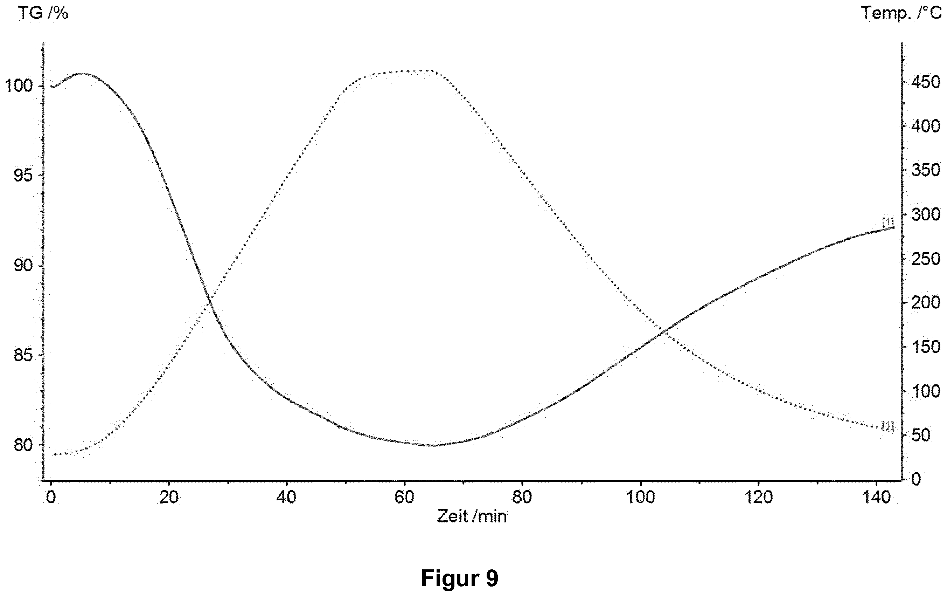

In Fig. 9 ist die TGA-Kurve des Materials mit drei Imprägnierzyklen dargestellt, wobei zu erkennen ist, dass unter Verwendung dieses Materials als Wärmespeichermedium weder die Wärmespeicherung noch die Wärmefreisetzung kaskadiert durchgeführt werden könnten, da keine unterschiedlichen Temperaturniveaus der Einzelreaktionen der Liganden feststellbar sind.

### Beispiel 6: [Cu(NH₃)₄]SO₄ auf Aktivkohle

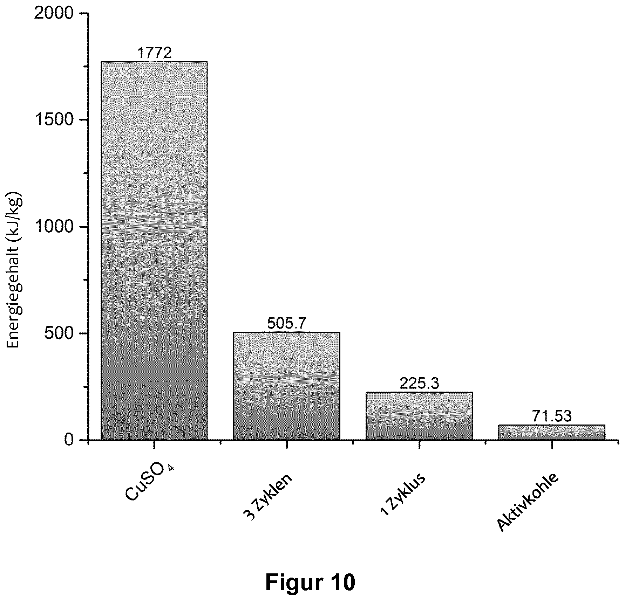

Analog zum obigen Versuch mit Zeolith wurde Aktivkohle (Korngröße 1-5 mm, unbehandelt) in einem bzw. drei Zyklen mit CuSO₄-Lösung imprägniert und im DSC-TGA-Instrument mit NH₃ zum Tetraamminkomplex umgesetzt. Dabei ergaben sich speicherbare Wärmemengen von 225,3 bzw. 505,7 kJ/kg, wobei der Wert für Aktivkohle selbst 71,53 kJ/kg beträgt, wie dies in Fig. 10 grafisch dargestellt ist.

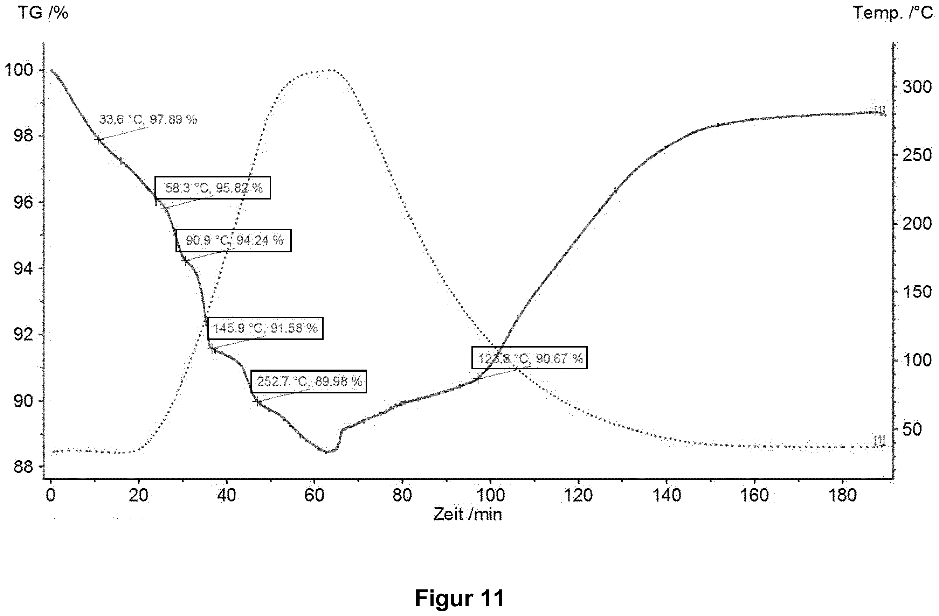

In Fig. 11 ist die TGA-Kurve des Materials mit drei Imprägnierzyklen dargestellt, wobei auffällt, dass in diesem Fall die vier NH₃-Liganden des Amminkomplexes einzeln, d.h. in vier Stufen, abgespaltet wurden, während es bei reinem [Cu(NH₃)₄]SO₄ in Beispiel 1 nur drei Stufen waren. Allerdings wurden die vier Liganden dafür beim Abkühlen unter Ammoniak nicht kaskadiert angelagert, während dies bei dem Komplex ohne Trägermaterial ebenfalls in drei Stufen erfolgt war.

Aufgrund der ausreichend großen Differenzen zwischen den vier Stufen der Ligandenabspaltung ist dieses Material in der Praxis für eine kaskadierte Wärmespeicherung durchaus einsetzbar. Aufgrund der fehlenden Möglichkeit, auch die Wärmefreisetzung kaskadiert durchzuführen, wird es jedoch gemäß vorliegender Erfindung nicht bevorzugt.

### Beispiel 7: [Cu(NH₃)₄]SO₄ auf Vermiculit

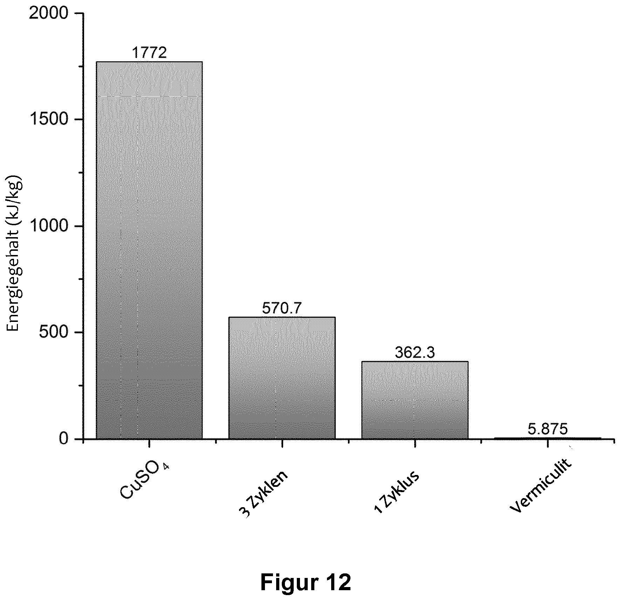

Analog zu den obigen Versuchen wurde Vermiculit (Korngröße 1-3 mm) in einem bzw. drei Imprägnierzyklen mit Kupfersulfat beladen, das mit NH₃ zum Tetraamminkomplex umgesetzt wurde. Dabei ergaben sich recht gute Werte für die speicherbaren Wärmemengen von 362,3 bzw. 570,7 kJ/kg, wobei der Wert für Vermiculit selbst nur 5,9 kJ/kg beträgt, wie dies in Fig. 12 grafisch dargestellt ist.

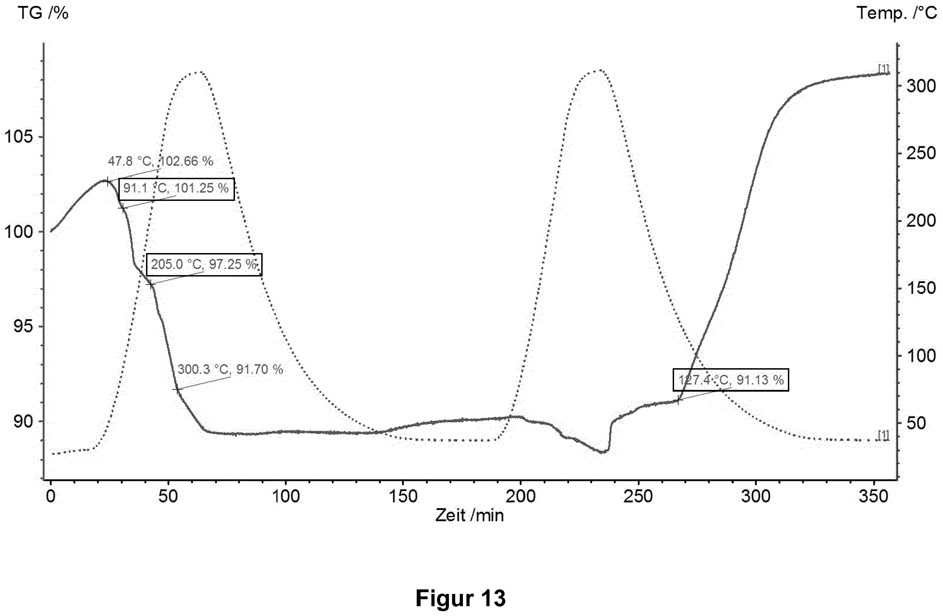

In Fig. 13 ist wiederum die TGA-Kurve des in drei Zyklen imprägnierten Materials dargestellt, wobei in diesem Fall erst nach zweimaligem Erhitzen auf die Maximaltemperatur die Ammoniak-Zufuhr gestartet wurde. Auch abgesehen davon ergibt sich ein anderes Bild als in den vorhergehenden Beispielen: Auf Vermiculit werden die vier NH₃-Liganden offenbar in zwei Stufen zu jeweils zwei Liganden abgespalten, während die erneute Anlagerung beim Abkühlen erneut in einer einzigen Stufe erfolgte.

Da die Temperaturdifferenz zwischen den beiden Stufen zwar rund 100 °C betrug, die Wärmefreisetzung aber auch hier nicht kaskadiert durchführbar ist, ist auch dieses Material in der Praxis zwar einsetzbar, aber gemäß vorliegender Erfindung nicht zu bevorzugen.

### Beispiel 8: [Cu(NH₃)₄]SO₄ auf Celit

Celit wurde mit Kupfersulfat in einem Gewichtsverhältnis zwischen CuSO₄ und Träger von 10:1 beladen, das erneut in NH₃ zum Tetramminkomplex umgesetzt wurde, woraus eine ausgezeichnete berechnete Wärmespeicherkapazität von 1136 kJ/kg folgte.

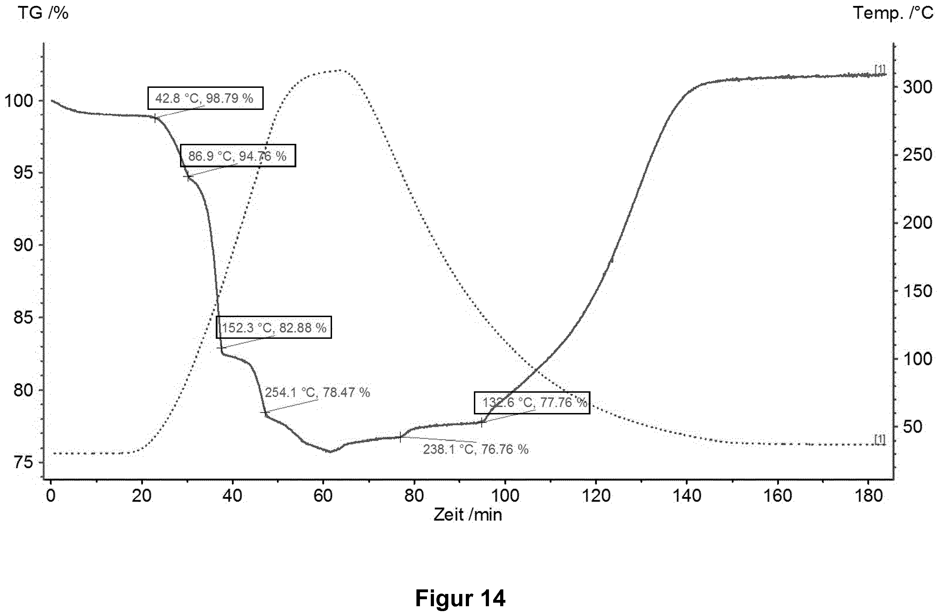

In Fig. 14 ist die TGA-Kurve dieses Materials dargestellt, und es zeigte sich, dass hier die Ligandenabspaltung des Amminkomplexes auf Träger demselben Schema folgte wie beim reinen Amminkomplex in Beispiel 1, nämlich 1:2:1. Die Wärmefreisetzung unter erneutem Ligandeneinbau erfolgte allerdings auch bei diesem Material nicht kaskadiert.

Aufgrund der relativ hohen Temperaturdifferenzen zwischen den Stufen und der relativ hohen Wärmespeicherkapazität ist dieses Material für die praktische Anwendung recht gut geeignet und daher gemäß vorliegender Erfindung zu bevorzugen.

### Beispiel 9: [Cu(NH₃)₄]SO₄ auf Silica

Analog zum obigen Versuch mit Celit wurde auch Silica (Partikelgröße 60 µm) mit Kupfersulfat in einem Gewichtsverhältnis zwischen CuSO₄ und Träger von 10:1 beladen, das in NH₃ zum Tetramminkomplex umgesetzt wurde, woraus eine noch bessere berechnete Wärmespeicherkapazität von 1263 kJ/kg folgte.

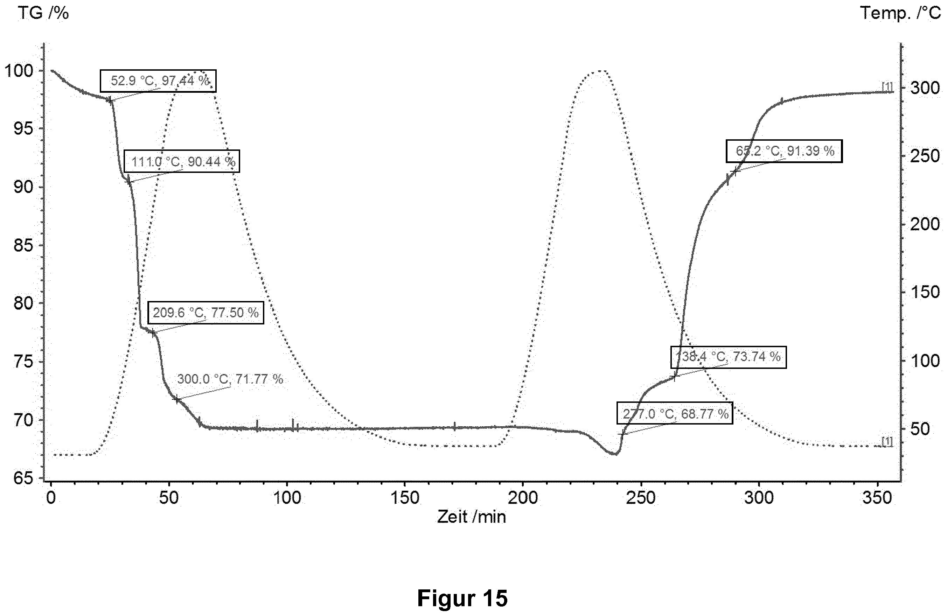

In Fig. 15 ist die TGA-Kurve dargestellt, wobei auffällt, dass in diesem Fall beide Prozesse, d.h. Wärmespeicherung und -freisetzung, kaskadiert erfolgen können, und zwar nach demselben 1-2-1-Schema wie der reine Amminkomplex. Aufgrund der sehr großen Temperaturdifferenzen zwischen den einzelnen Stufen bei beiden Prozessen stellt Silica ein besonders bevorzugtes Trägermaterial für die vorliegende Erfindung dar.

### Beispiel 10: [Cu(NH₃)₄]SO₄ auf Sepiolith

Analog zu Beispiel 9 wurde Sepiolith im Gewichtsverhältnis 10:1 mit Kupfersulfat beladen, das in NH₃ zum Tetramminkomplex umgesetzt wurde, woraus eine ebenfalls ausgezeichnete Wärmespeicherkapazität von 1227 kJ/kg folgte.

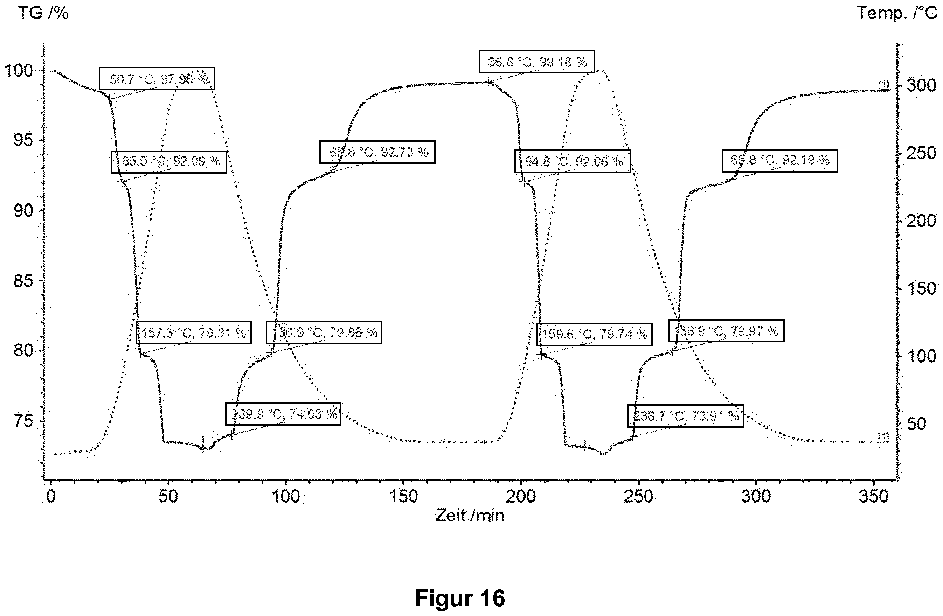

Anhand der TGA-Kurve in Fig. 16, in der zwei aufeinander folgende Zyklen von Wärmespeicherung und -freisetzung dargestellt sind, zeigt sich, dass sich auch dieses Material in beiden Prozessen nach demselben Schema 1-2-1 verhält und angesichts der ebenfalls großen Temperaturdifferenzen ausgezeichnet für die praktische Anwendung geeignet ist.

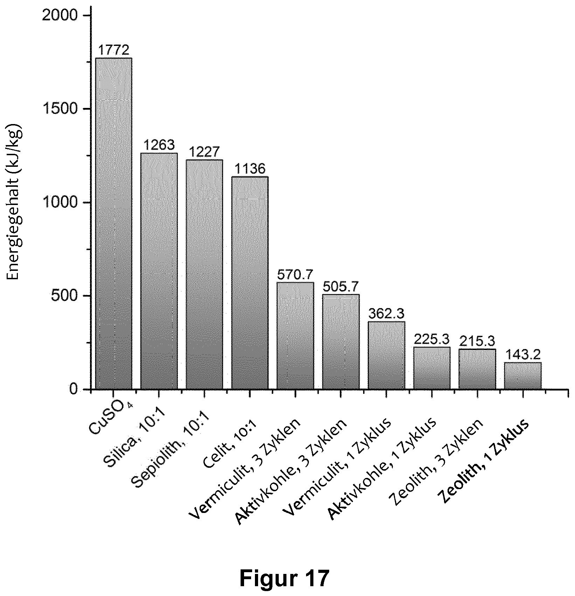

In Fig. 17 sind die in den Beispielen 6 bis 10 und im Vergleichsbeispiel hergestellten, an die verschiedenen Trägermaterialien gebundenen Tetraamminkupfersulfat-Komplexe nach ihrer Wärmespeicherkapazität gereiht dargestellt. Man erkennt, dass die Kombinationen mit Silica, Sepiolith und Celit deutlich über jenen mit Zeolith, Aktivkohle und Vermiculit liegen.

Aufgrund der im Vergleich zu Celit und Silica geringeren Kosten stellt allerdings Sepiolith derzeit das Trägermaterial der Wahl für die Ausführung des erfindungsgemäßen Verfahrens dar.

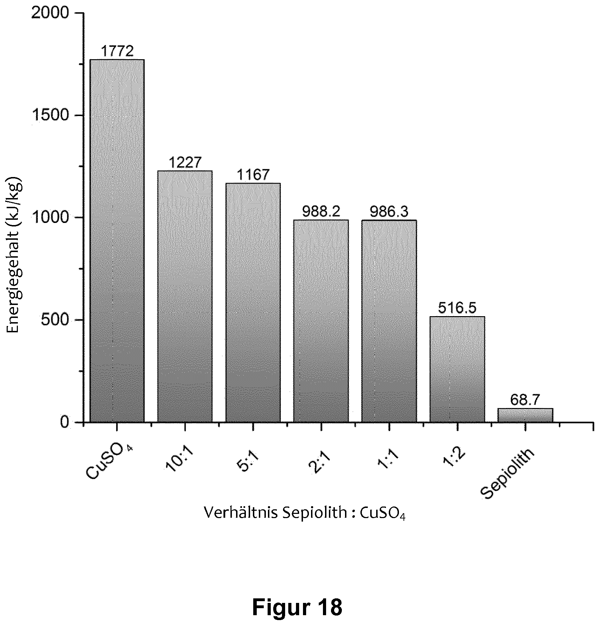

Aufgrund dessen wurden weitere Versuche mit Sepiolith als Träger unternommen, indem neben dem bereits getesteten Verhältnis von 10:1 zwischen Amminkomplex und Trägermaterial auch die Verhältnisse 5:1, 2:1, 1:1 und 1:2 untersucht wurden. In Fig. 18 sind die zugehörigen Wärmespeicherkapazitäten dargestellt. Man erkennt, dass die Wärmespeicherkapazität bereits beim geringsten Gehalt des Kupferkomplexes, d.h. bei 2 Gewichtsteilen Träger pro 1 Gewichtsteil Amminkomplex, um eine Zehnerpotenz höher liegt als jene von reinem Sepiolith, und sich beim Übergang von 1:2 zum Verhältnis 1:1 verdoppelt. Überraschenderweise ändert sich jedoch die speicherbare Wärmemenge bei der Verdoppelung der Menge an Amminkomplex zum Verhältnis 2:1 praktisch gar nicht, wonach die Erhöhung auf 5:1 nur eine etwa 20%ige Verbesserung der Wärmespeicherkapazität mit sich bringt und die Verdoppelung des Verhältnisses auf 10:1 schließlich erneut kaum eine Verbesserung bedeutet.

Daraus lässt sich ableiten, dass im Hinblick auf die Wärmespeicherkapazität das bevorzugte Verhältnis zwischen Kupfersulfat und Sepiolith wohl zumindest 3:1, noch bevorzugter zwischen 4:1 und 6:1 und insbesondere etwa 5:1, betragen sollte. Im Hinblick auf die Kosten des Wärmespeichermediums kann jedoch in der Praxis in vielen Fällen ein Verhältnis von 1:1 für ausreichend erachtet werden.

## Patentansprüche

1. Verfahren zur thermochemischen Energiespeicherung mittels Durchführung reversibler chemischer Reaktionen zur Speicherung von Wärmeenergie in Form von chemischer Energie in einem oder mehreren Amminkomplexen von Übergangsmetallsalzen der Formel [Me(NH₃)ₙ]X, worin Me für zumindest ein Übergangsmetallion, X für ein oder mehrere Gegenionen in einer zum Ladungsausgleich des Komplexes ausreichenden Menge und n für die Anzahl der an das jeweilige Übergangsmetallsalz koordinierten NH₃-Liganden stehen, unter Nutzung des folgenden chemischen Gleichgewichts:
[Me(NH₃)ₙ]X + ΔH_{R} 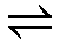 MeX + n NH₃,
**dadurch gekennzeichnet, dass**
die Wärmespeicherung unter endothermer Abspaltung der NH₃-Liganden aus dem Amminkomplex und/oder die Wärmefreisetzung unter exothermer Beladung des Übergangsmetallsalzes mit den NH₃-Liganden in zumindest zwei Stufen bei unterschiedlichen Temperaturen durchgeführt werden/wird,
mit der Maßgabe, dass die Anzahl n der an das Übergangsmetallsalz koordinierten NH₃-Liganden zumindest 2 beträgt.

2. Verfahren nach Anspruch 1, **dadurch gekennzeichnet, dass** als Übergangsmetallsalz ein Salz von Cu, Ni, Co oder Zn eingesetzt wird.

3. Verfahren nach Anspruch 2, **dadurch gekennzeichnet, dass** als Übergangsmetallsalz ein Salz von Cu oder Ni eingesetzt wird.

4. Verfahren nach Anspruch 3, **dadurch gekennzeichnet, dass** als Übergangsmetallsalz ein Cu-Salz eingesetzt wird.

5. Verfahren nach einem der Ansprüche 1 bis 4, **dadurch gekennzeichnet, dass** als Übergangsmetallsalz ein Sulfat oder Chlorid des Übergangsmetalls eingesetzt wird.

6. Verfahren nach Anspruch 5, **dadurch gekennzeichnet, dass** als Übergangsmetallsalz ein Sulfat des Übergangsmetalls eingesetzt wird.

7. Verfahren nach Anspruch 6, **dadurch gekennzeichnet, dass** als Übergangsmetallsalz CuSO₄ eingesetzt wird.

8. Verfahren nach einem der Ansprüche 1 bis 7, **dadurch gekennzeichnet, dass** das Übergangsmetallsalz auf einem gegenüber der Reaktion inerten Trägermaterial eingesetzt wird.

9. Verfahren nach Anspruch 8, **dadurch gekennzeichnet, dass** als Trägermaterial Silica, Sepiolith, Celit, Vermiculit oder Aktivkohle eingesetzt wird.

10. Verfahren nach Anspruch 9, **dadurch gekennzeichnet, dass** als Trägermaterial Silica, Sepiolith oder Celit eingesetzt wird.

11. Verfahren nach Anspruch 10, **dadurch gekennzeichnet, dass** als Trägermaterial Sepiolith eingesetzt wird.

12. Verfahren nach einem der Ansprüche 8 bis 11, **dadurch gekennzeichnet, dass** das Übergangsmetallsalz auf dem Trägermaterial in einem Gewichtsverhältnis zwischen Salz und Trägermaterial von zumindest 1:1 eingesetzt wird.

13. Verfahren nach Anspruch 12, **dadurch gekennzeichnet, dass** das Übergangsmetallsalz auf dem Trägermaterial in einem Gewichtsverhältnis zwischen Salz und Trägermaterial von zumindest 3:1 eingesetzt wird.

14. Verfahren nach Anspruch 13, **dadurch gekennzeichnet, dass** das Übergangsmetallsalz auf dem Trägermaterial in einem Gewichtsverhältnis zwischen Salz und Trägermaterial zwischen 4:1 und 6:1 eingesetzt wird.

15. Verfahren nach Anspruch 14, **dadurch gekennzeichnet, dass** das Übergangsmetallsalz auf dem Trägermaterial in einem Gewichtsverhältnis zwischen Salz und Trägermaterial von etwa 5:1 eingesetzt wird.

## Claims

1. A method of thermo-chemical energy storage by carrying out reversible chemical reactions for storing heat energy in the form of chemical energy in one or more ammine complexes of transition metal salts of the formula [Me(NH₃)ₙ]X, wherein Me is at least one transition metal ion, X is one or more counterions in an amount sufficient for charge equalization of the complex, and n is the number of NH₃ ligands coordinated to the respective transition metal salt, by using the following chemical equilibrium:
[Me(NH₃)ₙ]X + ΔH_{R} 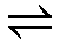 MeX + n NH₃,
**characterized in that**
said heat storage is performed by endothermic cleavage of the NH₃ ligands from the ammine complex and/or that the heat release is performed by exothermic loading of the transition metal salt with the NH₃ ligands in at least two steps at different temperatures,
with the proviso that the number n of NH₃ ligands coordinated to the transition metal salt is at least 2.

2. The method according to Claim 1, **characterized in that** a salt of Cu, Ni, Co or Zn is used as the transition metal salt.

3. The method according to Claim 2, **characterized in that** a salt of Cu or Ni is used.

4. The method according to Claim 3, **characterized in that** a Cu salt is used as the transition metal salt.

5. The method according to any one of Claims 1 to 4, **characterized in that** a sulfate or chloride of the transition metal is used as the transition metal salt.

6. The method according to Claim 5, **characterized in that** a sulfate of the transition metal is used as the transition metal salt.

7. The method according to Claim 6, **characterized in that** CuSO₄ is used as the transition metal salt.

8. The method according to any one of the Claims 1 to 7, **characterized in that** the transition metal salt is utilized supported on a carrier material which is inert to the reaction.

9. The method according to Claim 8, **characterized in that** silica, sepiolite, celite, vermiculite or activated charcoal is used as the carrier material.

10. The method according to Claim 9, **characterized in that** silica, sepiolite or celite is used as the carrier material.

11. The method according to Claim 10, **characterized in that** sepiolite is used as the carrier material.

12. The method according to any one of the Claims 8 to 11, **characterized in that** the transition metal salt supported on the carrier material is used at a weight ratio between salt and carrier material of at least 1:1.

13. The method according to Claim 12, **characterized in that** the transition metal salt supported on the carrier material is used at a weight ratio between salt and carrier material of at least 3:1.

14. The method according to Claim 13, **characterized in that** the transition metal salt supported on the carrier material is used at a weight ratio between salt and carrier material of between 4:1 and 6:1.

15. The method according to Claim 14, **characterized in that** the transition metal salt supported on the carrier material is used at a weight ratio between salt and carrier material of about 5:1.

## Revendications

1. Procédé pour le stockage d'énergie thermochimique par la réalisation de réactions chimiques réversibles pour le stockage d'énergie thermique sous forme d'énergie chimique dans un ou plusieurs complexes ammine de sels de métal de transition de la formule [Me(NH₃)ₙ]X, Me étant au moins un ion métallique de transition, X étant un ou plusieurs contre-ions présent(s) dans une quantité suffisante pour équilibrer la charge du complexe, et n étant le nombre des ligands NH₃ coordonnés au sel de métal de transition respectif, en utilisant l'équilibre chimique suivant :
[Me(NH₃)ₙ]X + ΔH_{R} 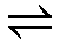 MeX + n NH₃,
**caractérisé en ce que**
le stockage de chaleur est effectué par la dissociation endothermique des ligands NH₃ du complexe ammine et/ou **en ce que** le dégagement de chaleur est effectué par le chargement exothermique du sel de métal de transition avec les ligands NH₃ dans au moins deux étapes à températures différentes,
étant entendu que le nombre n de ligands NH₃ coordonnés au sel de métal de transition est au moins 2.

2. Procédé selon la revendication 1, **caractérisé en ce qu'**un sel de Cu, Ni, Co ou Zn est utilisé comme sel de métal de transition.

3. Procédé selon la revendication 2, **caractérisé en ce qu'**un sel de Cu ou Ni est utilisé comme sel de métal de transition.

4. Procédé selon la revendication 3, **caractérisé en ce qu'**un sel de Cu est utilisé comme sel de métal de transition.

5. Procédé selon l'une quelconque des revendications 1 à 4, **caractérisé en ce qu'**un sulfate ou chlorure du métal de transition est utilisé comme sel de métal de transition.

6. Procédé selon la revendication 5, **caractérisé en ce qu'**un sulfate du métal de transition est utilisé comme sel de métal de transition.

7. Procédé selon la revendication 6, **caractérisé en ce que** CuSO₄ est utilisé comme sel de métal de transition.

8. Procédé selon l'une quelconque des revendications 1 à 7, **caractérisé en ce que** le sel de métal de transition est utilisé sur un matériau support inerte vis-à-vis de la réaction.

9. Procédé selon la revendication 8, **caractérisé en ce que** de la silice, sépiolite, célite, vermiculite ou du charbon activé est utilisé(e) comme matériau support.

10. Procédé selon la revendication 9, **caractérisé en ce que** de la silice, sépiolite ou célite est utilisée comme matériau support.

11. Procédé selon la revendication 10, **caractérisé en ce que** de la sépiolite est utilisée comme matériau support.

12. Procédé selon l'une quelconque des revendications 8 à 11, **caractérisé en ce que** le sel de métal de transition sur le matériau support est utilisé dans un rapport en poids entre sel et matériau support d'au moins 1:1.

13. Procédé selon la revendication 12, **caractérisé en ce que** le sel de métal de transition sur le matériau support est utilisé dans un rapport en poids entre sel et matériau support d'au moins 3:1.

14. Procédé selon la revendication 13, **caractérisé en ce que** le sel de métal de transition sur le matériau support est utilisé dans un rapport en poids entre sel et matériau support compris entre 4:1 et 6:1.

15. Procédé selon la revendication 14, **caractérisé en ce que** le sel de métal de transition sur le matériau support est utilisé dans un rapport en poids entre sel et matériau support d'environ 5:1.
